# FASCICULE DE BREVET EUROPEEN

(11) **EP 2 886 883 B1**
(45) Date de publication et mention de la délivrance du brevet: **04.01.2017**
(21) Numéro de dépôt: 14197298.4
(22) Date de dépôt: 11.12.2014
(51) Int. Cl.: F16B 19/08

(54) **Composant de fixation et d'assemblage auto-perceur**
Selbstbohrendes Schnellbauteil zum Befestigen und Zusammenbauen
Self-piercing assembly and attachment component

(30) Priorité: 18.12.2013 FR 1302984
(43) Date de publication de la demande: 24.06.2015
(73) Titulaire: Bollhoff Otalu S.A., 73490 La Ravoire (FR)
(72) Inventeur: Faguer, Sylvain, 73800 Arbin (FR); Bovagnet, Frédéric, 73470 Novalaise (FR); Lejars, Patrick, 73610 Saint Alban de Montbel (FR)
(74) Mandataire: Talbot, Alexandre

(56) Documents cités:
- EP-A2- 2 505 856
- WO-A2-2008/011257
- US-A- 4 293 258

## Description

### Domaine technique de l'invention

L'invention est relative à un composant de fixation, et plus précisément à un profil auto-perceur.

### État de la technique

Les rivets et goujons sont classiquement utilisés en aéronautique, dans l'industrie navale ou automobile pour assembler plusieurs éléments entre eux. Généralement, la forme des rivets ou des goujons est adaptée au type de matériau qui doit être percé afin de permettre une fixation optimisée.

Le corps et/ou le dessous de la tête d'un goujon ou d'un rivet peut par exemple être moleté ou cranté. La tête du goujon ou du rivet peut être elliptique. Le rivet ou le goujon peut être auto-perceur ou non.

Le document US 4293258 A décrit un profil auto-perceur muni d'une pointe permettant l'engagement du profil dans des plaques à solidariser.

Ces formes sont bien adaptées pour assembler des éléments métalliques, mais pas pour assembler des éléments réalisés dans des matériaux composites, ayant une matrice à base de résine thermodurcissable ou thermoplastique.

En effet, les matériaux composites sont hétérogènes. Ils peuvent contenir différents types de résine, et différents types de tissus contenant des fibres plus ou moins longues. Les éléments réalisés dans des matériaux composites peuvent donc se délaminer lors des étapes d'usinage ou de poinçonnage.

Au moment où les éléments sont assemblés, le délaminage n'est pas toujours constatable. Cela peut donc nuire gravement à la qualité du produit fini, qui peut finir par se fissurer ou se rompre. Le perçage des logements pour les rivets et goujons dans les matériaux composites doit donc être réalisé avec beaucoup de précautions.

Des outils spécifiques doivent être utilisés pour garantir la qualité du produit, en particulier dans le domaine des rivets et goujons auto-perceurs puisque le perçage et l'assemblage sont réalisés en une seule fois.

### Objet de l'invention

Un objet de l'invention est de réaliser un profil auto-perceur permettant de réduire la détérioration des matériaux composites lors de leur perçage.

A cet effet, le profil auto-perceur comprend :
- un corps doté d'une paroi latérale cylindrique,
- une tête auto-perceuse à une première extrémité du corps,
- un fût débouchant à une seconde extrémité du corps opposée à la tête auto-perceuse,
- une zone déformable disposée entre la tête auto-perceuse et la seconde extrémité du corps, et apte à former un bourrelet lors du sertissage du profil.

La tête auto-perceuse comporte en outre :
- une pointe définie par trois arêtes concourantes dont deux au moins sont des arêtes coupantes internes, la pointe permettant l'engagement du profil auto-perceur dans l'élément en matériau composite,
- au moins une arête coupante externe placée à l'extrémité de la paroi latérale cylindrique,
- une première face parallèle à un plan axial contenant l'axe de rotation du corps, la première face étant différente de ce plan axial, la première face définissant un premier espace vide dans la tête auto-perceuse pour faciliter le dégagement des copeaux lors du perçage.

L'une au moins des arêtes coupantes externes peut former un angle α compris entre -10° et +10° avec un plan radial orthogonal à l'axe de rotation.

Par ailleurs, la première face peut comporter à son extrémité au moins une arête coupante interne terminée par la pointe, et l'une au moins des arêtes coupantes internes peut former un angle β compris entre 70° et 75° avec l'axe de rotation.

Selon un mode de réalisation particulier de l'invention, le profil auto-perceur peut comporter une deuxième face parallèle à la première face, positionnée du même côté que la première face par rapport à un plan axial contenant l'axe de rotation du corps, la deuxième face définissant un deuxième espace vide dans la tête auto-perceuse pour faciliter le dégagement des copeaux lors du perçage.

Dans ce cas, la hauteur de la première face suivant une direction parallèle à l'axe de rotation peut être supérieure à la hauteur de la deuxième face suivant cette même direction.

L'une au moins des arêtes extrémales de la deuxième face peut être une arête de dégagement permettant l'évacuation des copeaux, et l'une au moins des arêtes de dégagement peut former un angle γ compris entre 30° et 60° avec l'axe de rotation.

Selon un mode de réalisation de l'invention, l'une au moins des arêtes coupantes externes peut être positionnée à l'extrémité d'au moins une dent.

La tête auto-perceuse peut enfin posséder un plan de symétrie orthogonal à la première face, et passant par l'axe de rotation.

La présente invention concerne également le procédé d'assemblage d'un profil auto-perceur avec un élément en matériau composite, le procédé comportant les étapes suivantes :
- fournir un appareil configuré pour usiner et sertir le profil auto-perceur,
- usiner l'élément en matériau composite au moyen du profil auto-perceur,
- sertir le profil auto-perceur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent de façon schématique des vues en perspective d'un mode de réalisation du profil auto-perceur,
- la figure 3 est une vue de dessous du profil auto-perceur selon le mode de réalisation des figures 1 et 2,
- les figures 4 et 5 sont des vues suivant les côtés A et B du profil auto-perceur selon le mode de réalisation des figures 1 et 2,
- la figure 6 est une vue en coupe du profil auto-perceur selon le mode de réalisation des figures 1 et 2.

### Description détaillée

Un profil auto-perceur 1 comporte un corps 2 doté d'une paroi latérale 3, et une tête auto-perceuse 4 à une première extrémité du corps, dont la forme est adaptée pour percer des éléments en matériaux composites sans trop les endommager.

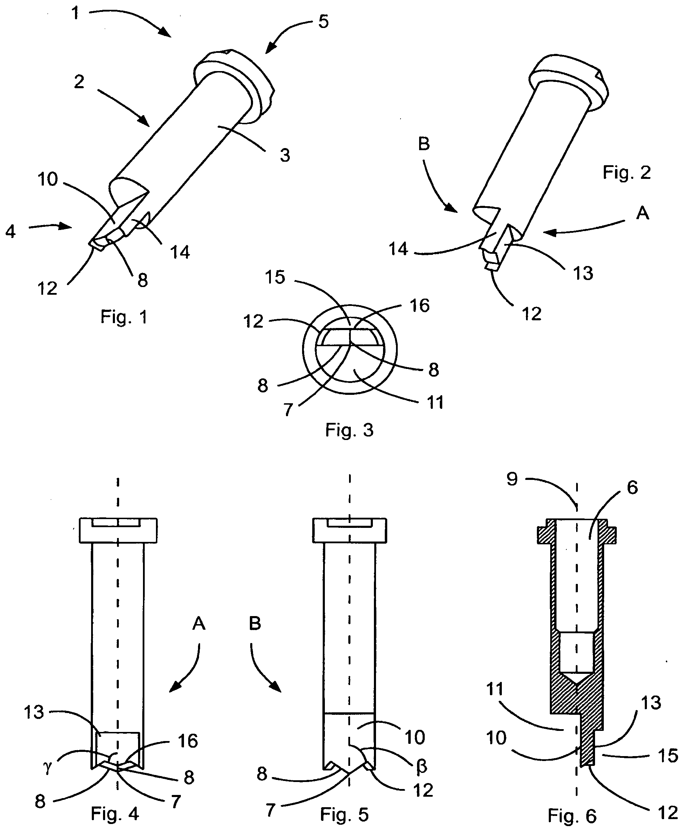

Dans le mode de réalisation avantageux illustré sur les figures, le profil auto-perceur 1 comporte un fût 6 (cf. figure 6) débouchant à une deuxième extrémité 5 du corps 2 opposée à la tête auto-perceuse 4.

Dans un mode de réalisation particulier, entre les deux extrémités 4 et 5, le corps 2 comporte une zone déformable qui est apte à former un bourrelet de sertissage, de sorte que le profil auto-perceur 1 peut être fixé à un élément en matériau composite situé entre le bourrelet et la deuxième extrémité 5 du corps 2. Le profil auto-perceur 1 peut par exemple être un rivet, un goujon ou un écrou.

La tête auto-perceuse 4 comporte une pointe 7 qui est la première zone du profil 1 à entrer en contact avec l'élément en matériau composite à percer. La pointe 7 permet donc l'engagement du profil auto-perceur 1 dans le matériau.

La pointe 7 est définie par trois arêtes concourantes dont deux au moins sont des arêtes coupantes internes 8. Les arêtes coupantes internes 8 sont en contact avec le fond du trou lors du perçage, et leur rôle est donc de réaliser une découpe nette et franche du matériau.

Les arêtes coupantes internes 8 peuvent avantageusement former un angle β compris entre 70° et 75° avec un axe de rotation 9 du profil 1 correspondant à l'axe longitudinal du fût 6. Cet angle β est bien adapté au perçage des matériaux composites car il permet de découper le matériau sans le fragiliser. Les angles β formés par les arêtes coupantes internes 8 et l'axe de rotation 9 peuvent avantageusement être égaux.

Par ailleurs, la pointe 7 est préférentiellement excentrée de l'axe de rotation 9 du profil auto-perceur 1, de préférence de quelques dixièmes de millimètres lorsque les dimensions de ce dernier sont de l'ordre de 3 ou 4 cm de long et de 0,5 mm à 1 cm de diamètre. Ainsi, lorsque le profil auto-perceur 1 est mis en rotation suivant l'axe 9 pour percer l'élément en matériau composite, la pointe 7 décrit un cercle autour de cet axe. Cette caractéristique permet avantageusement d'engager le profil auto-perceur 1 dans l'élément en matériau composite sans avoir recours à des avants trous, et sans le faire glisser. Décaler la pointe 7 de l'axe de rotation 9 limite également son émoussage lors du perçage.

Par ailleurs, la tête auto-perceuse 4 comporte une première face 10 parallèle et différente d'un plan axial contenant l'axe de rotation 9 du profil auto-perceur 1. La première face 10 est considérée comme parallèle à un plan axial, mais en pratique celle-ci peut former un angle compris entre -10° et +10° avec un plan axial. Cela est dû aux contraintes d'usinage du profil auto-perceur 1.

Selon un mode de réalisation avantageux, l'extrémité de la première face 10 peut avantageusement correspondre à la pointe 7. La position de cette première face 10 permet d'engager le profil auto-perceur 1 dans l'élément en matériau composite sans glisser.

La tête auto-perceuse 4 comporte en outre au moins une arête coupante externe 12 placée à l'extrémité de la paroi latérale cylindrique 3. Celle-ci est configurée pour couper les fibres de l'élément en matériau composite. La position de l'arête coupante externe 12 garantit la perpendicularité du profil auto-perceur 1 par rapport à la surface de l'élément à usiner. On évite ainsi les éclatements par délaminage dus par exemple à une sortie d'usinage de biais.

L'arête coupante externe 12 est contenue dans un plan, et forme un angle α avec un plan radial orthogonal à l'axe de rotation 9. L'angle α est préférentiellement compris entre -10 et +10° et avantageusement nul. Si la tête auto-perceuse 4 possède plusieurs arêtes coupantes externes 12, les angles formés par chaque arête coupante externe 12 et un plan radial peuvent avantageusement être égaux ou opposés.

Selon un mode de réalisation spécifique illustré sur les figures, la tête auto-perceuse 4 comporte une deuxième face 13 positionnée du même côté que la première face 10 par rapport à un plan axial contenant l'axe de rotation 9 du profil auto-perceur 1.

La deuxième face 13 peut avantageusement être parallèle à la première face 10. Les faces 10 et 13 sont alors séparées par une tranche 14 mesurant préférentiellement quelques millimètres suivant une direction radiale orthogonale à l'axe de rotation 9. Le profil auto-perceur 1 comporte alors au moins une arête coupante externe 12 située sur la tranche 14, à l'extrémité de la paroi latérale cylindrique 3. L'extrémité de la tranche 14 correspond à l'une des arêtes coupantes internes 8.

La hauteur de la deuxième face 13 suivant une direction parallèle à l'axe de rotation 9 est avantageusement moins importante que celle de la première face 10 suivant cette même direction, afin de garantir la solidité du profil 1 et éviter son endommagement. Cette propriété limite également les risques de glissement du profil 1 lors de l'engagement dans l'élément en matériau composite.

Par ailleurs, la deuxième face 13 ménage un deuxième espace vide 15 jouant un rôle identique au premier espace vide 11, à savoir la limitation des frottements lors du perçage, et le stockage des copeaux créés lors de la coupe.

Pour faciliter l'évacuation des copeaux vers les premier et deuxième espaces vides 11 et 15, la deuxième face 13 peut comprendre au moins une arête de dégagement 16. Cette arête de dégagement 16 forme avantageusement un angle γ avec l'axe de rotation 9 qui est plus petit que l'angle β formé par l'arête coupante interne 8 et l'axe de rotation 9, pour permettre le dégagement des copeaux créés par les arêtes coupantes externes 12 et internes 8. Comme les copeaux s'échappent au fur et à mesure de leur formation vers les premier et deuxième espaces vides 11 et 15, cela évite d'une part un échauffement du profil 1, et facilite d'autre part la pénétration dans le matériau à percer.

Selon un mode de réalisation particulier, l'arête de dégagement 16 forme un angle γ avec l'axe de rotation 9 qui est compris entre 30° et 60°. Si la tête auto-perceuse 4 comporte plusieurs arêtes de dégagement 16, les angles γ formés par les arêtes de dégagement 16 et l'axe de rotation 9 peuvent avantageusement être égaux.

Selon le mode de réalisation particulier illustré sur les figures, la tête auto-perceuse 4 est symétrique suivant un plan axial orthogonal à la première face 10.

Par ailleurs, comme illustré sur les figures, l'extrémité de la tête auto-perceuse 4 peut avoir sensiblement la forme d'un M, c'est-à-dire comporter deux dents 17 le long de la face latérale 3 du corps 2, tandis que la pointe 7 est équidistante de chaque dent 17. Dans ce mode de réalisation particulier, l'extrémité d'au moins l'une des dents 17 est dotée d'une arête coupante externe 12.

On peut également prévoir un mode de réalisation où la tête auto-perceuse 4 ne comporte qu'une seule dent 17, voire un mode de réalisation dans lequel la tête auto-perceuse 4 ne comporte aucune dent. L'avantage de la forme en M est la faible différence de hauteur entre la pointe 7 et la ou les arêtes coupantes externes 12, qui permettent à la paroi latérale 3 du corps 2 de guider le profil auto-perceur 1 dès l'engagement dans le matériau et d'éviter un usinage de biais.

Les profils auto-perceur 1 tels que ceux qui viennent d'être décrits peuvent par exemple être des rivets, des goujons ou des écrous. Ils sont préférentiellement réalisés en acier inoxydable pour ne pas se détériorer au contact d'éventuelles fibres de carbones présentes dans l'élément en matériau composite.

L'installation d'un profil 1 sur un élément en matériau composite est réalisée en deux étapes. La première correspond à une opération de perçage tandis que la seconde correspond à une opération de sertissage du profil 1 par déformation de la partie déformable du corps 2 jusqu'à ce qu'un bourrelet apparaisse.

Plus précisément, lors de l'étape de perçage, l'utilisateur visse le profil dans le matériau en usinant ce dernier à l'aide du ou des arêtes coupantes externes 12 et internes 8. Les copeaux créés par les arêtes sont évacués du fond du trou en se logeant dans les premier et deuxième espaces vides 11 et 15.

Il doit ensuite réaliser le sertissage en exerçant une force de traction afin de déformer le profil 1. Les deux étapes de l'installation peuvent avantageusement être réalisées à l'aide d'un unique appareil, par exemple avec une sertisseuse.

Afin de réaliser un perçage de qualité, la vitesse de rotation du profil lors du perçage doit être contrôlée. Il est à la portée de l'homme de l'art de choisir une vitesse de coupe et une avance adaptées au matériau qui est percé. Il est en particulier judicieux d'engager et de terminer l'étape de perçage en limitant le mouvement d'avance afin de garantir la qualité de l'usinage du matériau composite.

La présente invention ne se limite pas aux modes de réalisation qui viennent d'être décrits. Toutes les dimensions du profil auto-perceur 1 peuvent être adaptées au type d'élément à percer. L'homme du métier peut en particulier choisir la hauteur des première et deuxième faces 10 et 13 afin de créer des premier et deuxième espaces vides 11 et 15 de volumes suffisamment importants pour pouvoir loger tous les copeaux lors du perçage, pour éviter l'échauffement du profil auto-perceur 1.

## Revendications

1. Profil auto-perceur (1) destiné à percer un élément en matériau composite par rotation suivant un axe de rotation (9), le profil auto-perceur comportant
• un corps (2) doté une paroi latérale cylindrique (3),
• une tête auto-perceuse (4) à une première extrémité du corps (2),
• un fût (6) débouchant à une seconde extrémité (5) du corps (2) opposée à la tête auto-perceuse (4),
• une zone déformable disposée entre la tête auto-perceuse (4) et la seconde extrémité (5) du corps (2), et apte à former un bourrelet lors du sertissage du profil,
**caractérisé en ce que** la tête auto-perceuse (4) comporte
• une pointe (7) définie par trois arêtes concourantes dont deux au moins sont des arêtes coupantes internes (8), la pointe (7) permettant l'engagement du profil auto-perceur (1) dans l'élément en matériau composite,
• au moins une arête coupante externe (12) placée à l'extrémité de la paroi latérale cylindrique (3),
• une première face (10) parallèle à un plan axial contenant l'axe de rotation (9) du corps (2), la première face (10) étant différente de ce plan axial, la première face (10) définissant un premier espace vide (11) dans la tête auto-perceuse (4) pour faciliter le dégagement des copeaux lors du perçage.

2. Profil auto-perceur (1) selon la revendication 1, dans lequel la première face (10) comporte à son extrémité au moins une arête coupante interne (8) terminée par la pointe (7).

3. Profil auto-perceur (1) selon la revendication 2, dans lequel l'une au moins des arêtes coupantes internes (8) forme un angle β compris entre 70° et 75° avec l'axe de rotation (9).

4. Profil auto-perceur (1) selon l'une quelconque des revendications 1 à 3, dans lequel l'une au moins des arêtes coupantes externes (12) forme un angle α compris entre -10° et +10° avec un plan radial orthogonal à l'axe de rotation (9).

5. Profil auto-perceur (1) selon l'une quelconque des revendications 1 à 4, comportant une deuxième face (13) parallèle à la première face (10), positionnée du même côté que la première face (10) par rapport à un plan axial contenant l'axe de rotation (9) du corps (2), la deuxième face (13) définissant un deuxième espace vide (15) dans la tête auto-perceuse (4) pour faciliter le dégagement des copeaux lors du perçage.

6. Profil auto-perceur (1) selon la revendication 5, dans lequel la hauteur de la première face (10) suivant une direction parallèle à l'axe de rotation (9) est supérieure à la hauteur de la deuxième face (13) suivant cette même direction.

7. Profil auto-perceur (1) selon l'une quelconque des revendications 5 ou 6, dans lequel la tête auto-perceuse (4) comporte au moins une arête de dégagement (16) positionnée à l'extrémité de la deuxième face (13) pour permettre l'évacuation des copeaux.

8. Profil auto-perceur (1) selon la revendication 7, dans lequel l'une au moins des arêtes de dégagement (16) forme un angle γ compris entre 30° et 60° avec l'axe de rotation (9).

9. Profil auto-perceur (1) selon l'une quelconque des revendications 1 à 8, dans lequel l'une au moins des arêtes coupantes externes (12) est positionnée à l'extrémité d'au moins une dent (17).

10. Profil auto-perceur (1) selon l'une quelconque des revendications 1 à 9, dans lequel la tête auto-perceuse (6) possède un plan de symétrie orthogonal à la première face (10) et passant par l'axe de rotation (9).

11. Procédé d'assemblage d'un élément en matériau composite avec un profil selon l'une quelconque des revendications 1 à 10, comportant les étapes suivantes :
• fournir un appareil configuré pour usiner l'élément en matériau composite,
• usiner l'élément en matériau composite au moyen du profil auto-perceur (1),
• sertir le profil auto-perceur (1).

## Patentansprüche

1. Automatisches Bohrprofil (1), das dazu bestimmt ist, ein Element aus Verbundmaterial durch Drehung gemäß einer Drehachse (9) zu durchbohren, wobei das automatische Bohrprofil umfasst:
• einen Körper (2), der mit einer zylindrischen Seitenwand (3) versehen ist,
• einen automatischen Bohrkopf (4) an einem ersten Ende des Körpers (2),
• einen Schaft (6), der an einem zweiten Ende (5) des Körpers (2) mündet, das entgegengesetzt zum automatischen Bohrkopf (4) ist,
• einen verformbaren Bereich, der zwischen dem automatischen Bohrkopf (4) und dem zweiten Ende (5) des Körpers (2) angeordnet und geeignet ist, beim Bördeln des Profils einen Wulst zu bilden,
**dadurch gekennzeichnet, dass** der automatische Bohrkopf (4) umfasst:
• eine Spitze (7), die von drei konvergierenden Kanten gebildet wird, von denen mindestens zwei innere Schnittkanten (8) sind, wobei die Spitze (7) das Einführen des automatischen Bohrprofils (1) in das Element aus Verbundmaterial erlaubt,
• mindestens eine äußere Schnittkante (12), die am Ende der zylindrischen Seitenwand (3) angeordnet ist,
• eine erste Fläche (10), die parallel zu einer Axialebene ist, welche die Drehachse (9) des Körpers (2) enthält, wobei die erste Fläche (10) getrennt von dieser Axialebene ist und die erste Fläche (10) einen ersten Hohlraum (11) in dem automatischen Bohrkopf (4) bildet, um das Entfernen der Späne beim Bohren zu erleichtern.

2. Automatisches Bohrprofil (1) nach Anspruch 1, bei dem die erste Fläche (10) an ihrem Ende mindestens eine innere Schnittkante (8) umfasst, die in der Spitze (7) ausläuft.

3. Automatisches Bohrprofil (1) nach Anspruch 2, bei dem mindestens eine der internen Schnittkanten (8) einen Winkel β von 70 bis 75° mit der Drehachse (9) bildet.

4. Automatisches Bohrprofil (1) nach einem der Ansprüche 1 bis 3, bei dem mindestens eine der äußeren Schnittkanten (12) einen Winkel α von -10 bis +10° mit einer Radialachse bildet, die orthogonal zur Drehachse (9) ist.

5. Automatisches Bohrprofil (1) nach einem der Ansprüche 1 bis 4, das eine zweite Fläche (13) umfasst, die parallel zur ersten Fläche (10) ist, die auf der gleichen Seite wie die erste Fläche (10) bezüglich einer Axialebene angeordnet ist, die die Drehachse (9) des Körpers (2) enthält, wobei die zweite Fläche (13) einen zweiten Hohlraum (15) in dem automatischen Bohrkopf (4) definiert, um das Entfernen der Späne beim Bohren zu erleichtern.

6. Automatisches Bohrprofil (1) nach Anspruch 5, bei dem die Höhe der ersten Fläche (10) in einer zur Drehachse (9) parallelen Richtung größer als die Höhe der zweiten Fläche (13) in dieser gleichen Richtung ist.

7. Automatisches Bohrprofil (1) nach einem der Ansprüche 5 oder 6, bei dem der automatische Bohrkopf (4) mindestens eine Beseitigungskante (16) umfasst, die am Ende der zweiten Fläche (13) angeordnet ist, um das Entfernen der Späne zu ermöglichen.

8. Automatisches Bohrprofil (1) nach Anspruch 7, bei dem mindestens eine der Beseitigungskanten (16) einen Winkel von 30 bis 60° mit der Drehachse (9) bildet.

9. Automatisches Bohrprofil (1) nach einem der Ansprüche 1 bis 8, bei dem mindestens eine der äußeren Schnittkanten (12) am Ende mindestens eines Zahns (17) positioniert ist.

10. Automatisches Bohrprofil (1) nach einem der Ansprüche 1 bis 9, bei dem der automatische Bohrkopf (6) eine Symmetrieebene besitzt, die orthogonal zur ersten Fläche (10) ist und durch die Drehachse (9) führt.

11. Verfahren zum Verbinden eines Elements aus Verbundmaterial mit einem Profil nach einem der Ansprüche 1 bis 10, das folgende Schritte umfasst:
• Zurverfügungstellung eines Geräts, das geeignet ist, das Element aus Verbundmaterial zu bearbeiten,
• Bearbeitung des Elements aus Verbundmaterial mittels des automatischen Bohrprofils (1),
• Bördeln des automatischen Bohrprofils (1).

## Claims

1. A self-drilling component (1) designed to drill a composite material part by rotation along an axis of rotation (9), the self-drilling component comprising
• a body (2) provided with a cylindrical side wall (3),
• a self-drilling head (4) at a first end of the body (2),
• a shank (6) opening out at a second end (5) of the body (2) opposite the self-drilling head (4),
• a deformable area arranged between the self-drilling head (4) and the second end (5) of the body (2), and designed to form a flange when crimping of the component is performed,
**characterized in that** the self-drilling head (4) comprises
• a tip (7) defined by three concurrent edges at least two of which are internal cutting edges (8), the tip (7) enabling engagement of the self-drilling component (1) in the composite material part,
• at least one external cutting edge (12) placed at the end of the cylindrical side wall (3),
• a first surface (10) parallel to an axial plane containing the axis of rotation (9) of the body (2), the first surface (10) being different from this axial plane, the first surface (10) defining a first empty space (11) in the self-drilling head (4) to facilitate removal of the shavings when drilling is performed.

2. The self-drilling component (1) according to claim 1, wherein at its end the first surface (10) comprises at least one internal cutting edge (8) terminated by the tip (7).

3. The self-drilling component (1) according to claim 2, wherein at least one of the internal cutting edges (8) forms an angle β comprised between 70° and 75° with the axis of rotation (9).

4. The self-drilling component (1) according to any one of claims 1 to 3, wherein at least one of the external cutting edges (12) forms an angle α comprised between -10° and +10° with a radial plane orthogonal to the axis of rotation (9).

5. The self-drilling component (1) according to any one of claims 1 to 4, comprising a second surface (13) parallel to the first surface (10), positioned on the same side as the first surface (10) with respect to an axial plane containing the axis of rotation (9) of the body (2), the second surface (13) defining a second empty space (15) in the self-drilling head (4) to facilitate removal of the shavings when drilling is performed.

6. The self-drilling component (1) according to claim 5, wherein the height of the first surface (10) in a direction parallel to the axis of rotation (9) is greater than the height of the second surface (13) in this same direction.

7. The self-drilling component (1) according to any one of claims 5 or 6, wherein the self-drilling head (4) comprises at least one removal edge (16) positioned at the end of the second surface (13) to enable removal of the shavings.

8. The self-drilling component (1) according to claim 7, wherein at least one of the removal edges (16) forms an angle γ comprised between 30° and 60° with the axis of rotation (9).

9. The self-drilling component (1) according to any one of claims 1 to 8, wherein at least one of the external cutting edges (12) is positioned at the end of at least one tooth (17).

10. The self-drilling component (1) according to any one of claims 1 to 9, wherein the self-drilling head (6) has a plane of symmetry orthogonal to the first surface (10) and passing via the axis of rotation (9).

11. A method for performing assembly of a composite material part with a component according to any one of claims 1 to 10, comprising the following steps
• providing equipment configured to machine the composite material part,
• machining the composite material part by means of the self-drilling component (1),
• crimping the self-drilling component (1).
